# EUROPEAN PATENT SPECIFICATION

(11) **EP 4 533 566 B1**
(45) Date of publication and mention of the grant of the patent: **25.11.2026**
(21) Application number: 23726508.7
(22) Date of filing: 16.05.2023
(51) Int. Cl.: H01M 4/88, H01M 4/92, H01M 8/10

(54) **PROCESS FOR PREPARING A SUPPORTED METAL CATALYST AND THE SO-OBTAINED CATALYST**
VERFAHREN ZUM HERSTELLEN EINES METALLISCHEN TRÄGERKATALYSATORS UND SO ERHALTENER KATALYSATOR
PROCÉDÉ DE PRÉPARATION D'UN CATALYSEUR MÉTALLIQUE SUPPORTÉ ET CATALYSEUR AINSI OBTENU

(30) Priority: 26.05.2022 EP 22175628
(43) Date of publication of application: 09.04.2025
(73) Proprietor: Studiengesellschaft Kohle gGmbH, 45470 Mülheim (DE)
(72) Inventor: SCHUETH, Ferdi, 45470 Mülheim an der Ruhr (DE); GUNNARSON (BIRTH NAME: HOPF), Alexander, 45468 Mülheim an der Ruhr (DE); DE BELLIS, Jacopo, 45468 Mülheim an der Ruhr (DE)
(86) International application number: PCT/EP2023/063099
(87) International publication number: WO 2023/227419

(56) References cited:
- EP-A1- 3 614 473
- EP-A1- 3 843 186
- WO-A1-2021/156644
- US-A1- 2006 099 483

## Description

The present invention refers to a process for preparing a supported metal catalyst, in particular a supported bimetallic catalyst and the so-obtained catalyst combining high stability with unique electronic and structural properties.

Bimetallic catalysts, and by extension alloy catalysts, are characterized by unique electronic and structural properties, which are responsible for the improved overall catalytic performance often observed when compared with their monometallic counterparts. For example, alloying Pt with Ru is beneficial for application in direct methanol fuel cells (DMFCs) and polymer-exchange membrane fuel cells (PEMFCs) where CO-containing hydrogen feed is used because the tolerance of the catalyst towards CO-poisoning is greatly improved. Likewise, systems based on PtNi and PtCo are very attractive catalysts for the oxygen reduction reaction (ORR) as they are characterized by more than double the specific activity compared to systems based on Pt-only. Thus, they represent the state-of-the-art catalysts for the cathode compartment of PEMFCs. Au-Pd catalysts were instead shown to cooperatively enhance redox reactions (e.g., oxidative dehydrogenation of hydroxymethylfurfural) via the segregation of Pd and Au from Au-Pd assemblies, demonstrating a novel catalytic effect. The most typical example of synergism is represented by the interplay between copper and zinc during the catalytic CO₂ hydrogenation to methanol, where the formation of a Cu-Zn alloy and subsequent oxidation results in a highly abundant Cu-ZnO interface beneficial for the reaction to take place. However, many other similar instances can be found in the literature.

The procedures applied to synthesize supported monometallic metal catalysts (e.g., wet and dry impregnation, coprecipitation, and colloidal deposition) are also used to prepare bimetallic formulations but involve multiple metal precursors. With wet impregnation, the metal precursors and the support are dispersed in a solvent, and then the suspension is filtered and dried. In this way, attractive forces are mainly responsible for the adsorption of the metal precursor on the support (pre-catalyst), thus limiting control over the metal loading. However, if filtration is bypassed and thus drying is directly used to remove the solvent, the limitations over maximum metal loadings are encompassed, but broad particle size distributions are typically obtained.

An alternative to impregnation and drying is dry impregnation, where the metal precursor is deposited and thus dispersed over the support by using only a very low amount or no solvent at all to form the pre-catalyst. When porous supports are used, incipient wetness impregnation is usually the method of choice, being the most suitable to maximize permeation of the metal precursor(s) into the pore system. Briefly, an amount of liquid metal precursor (as solution or melt) equal to the support pore volume is impregnated via capillary forces. Unfortunately, such procedures often do not allow a high loading and may be difficult to scale up. The colloidal synthesis of alloyed nanoparticles has mainly been applied to generate active metal catalysts with controlled size, shape, and composition. However, besides being hardly scalable, the method is also uneconomical due to the need for high dilution and surfactant control. Coprecipitation represents the most established synthetic methodology for large quantities of supported alloyed catalyst. Thus, metal precursors and support are usually first dispersed in a solvent. Then, precipitation is triggered either by a change in pH, temperature or by the addition of a reducing agent. Large amounts of solvents (often organic) and hazardous chemicals (e.g., formaldehyde, metal borates) represent a downside of the method. Filtering and drying typically follow, as customary in the case of most traditional wet-chemical procedures towards supported bimetallic catalysts. At the end, to obtain the final, most performant form of the catalysts, calcination, reduction or other treatments are often necessary, independently of the method used to prepare the pre-catalyst. This represents a significant share in the price of the catalyst and is a reason for the active development of more straightforward and preferably solvent-free synthesis procedures.

Processes for preparing catalysts for various applications including for fuel cells are known in the prior art. For example, EP 3 614 473 A1 discloses a method for manufacturing a catalyst for solid polymer fuel cells making use of a heat treated platinum catalyst
Similarly, WO 2021 /156644 A1 discloses a method of preparing a catalyst for a fuel cell, the final catalyst being denoted as Pt-Fe-N-C(NH₃).

EP 3 843 186 A1 discloses a method of preparing a catalyst for a fuel cell, with a Pt alloy catalyst having a Pt alloy (Pt-M1 alloy or Pt-M1 -M2 alloy) as catalyst particles.

Furthermore, US 2006/099483 A1 discloses a method of preparing a catalyst for a fuel cell, comprising a mixed metal catalyst including at least one element selected from the group consisting of silicon, aluminum, and titanium and a catalytic metal precursor.

Over time, many alternative synthetic strategies were made available to simplify procedures and thus bypass the difficulties implied by solvent-based methods. Among others, mechanochemical methods, primarily dominated by ball milling, are becoming increasingly popular as an alternative approach for the solid-state synthesis of a wide range of materials. In fact, ball milling has already been successfully applied to synthesize molecular complexes, coordination polymers, extended inorganic solids directly from the elements, nanocomposites, and functional materials. Most importantly, mechanochemistry has also been recognized as a convenient means for the nanostructuring of solid materials for heterogeneous catalysis, including metal and metal oxide nanoparticles, porous materials, supported metal catalysts, and hybrid inorganic-organic materials. Mechanochemistry is advantageous in many ways for solid catalyst synthesis, either involved in a step or being the main stage of the preparation, particularly from an industrial point of view. Indeed, ball milling is one of the least sophisticated and inexpensive technologies, as most mechanochemically induced reactions are typically fast and efficiently carried out at nearly-ambient conditions with only minimal amounts of a solvent or other substances as process control agents, thus implying limited ecologically harmful wastes. Besides, ball milling occasionally enables the synthesis of solid catalysts with improved performance (e.g., activity and stability) due to increased reactivity of solid phases under mechanochemical conditions. If not, temperature decrease and easy interaction of phases during further treatments (e.g., calcination, reduction, and annealing) are at least observed. However, these processes are difficult for the synthesis of metal nanoparticles or bi- or multimetallic nanoparticles on different types of carbon, due to the mechanical properties of carbon.

Herein, the present inventors have developed a facile, potentially scalable, mechanochemical assisted two-step procedure to synthesize supported metallic or bimetallic catalysts on various high surface area supports, in particular carbon supports, with the examples of PtNi-, PtCo, PtSn-, PtRh-, Ptlr-, PtRu- and Pt-based catalysts. In a first step, at least one metal compound such as a metal acetylacetonate is homogeneously dispersed over the target support via mild ball milling. In a second step, the resulting material, the pre-catalyst, is thermally treated via reduction with hydrogen and optionally follow-up by annealing under argon flow in a tubular oven. Different annealing temperatures and the impact of reduction on the properties of final materials were investigated, and optimal conditions were found.

Thus, the present invention is directed to a process for preparing a supported metal catalyst on an electroconductive support wherein, in a first step, at least one metal compound is subjected to ball milling with an electrically conductive (electroconductive) target support which is selected from carbon, carbon black, titanium carbide, titanium nitride, boron nitride, niobium nitride, indium tin oxide and antimony tin oxide, preferably carbon, titanium nitride, boron nitride, more preferably carbon, and, in a second step, the product of the first step is hydrogenated under a H₂ pressure of 1 to 10 atm in a temperature range from 100°C to 500°C for a time period of 1 to 3 hours and, in an optional third step, the product of the second step is annealed under a protective gas atmosphere in a temperature range from 400 °C to 1200 °C for a time period of 2 to 12 hours, wherein the metal of the at least one metal compound is selected from at least one catalytically active metal selected from Fe, Co, Ni, Ru, Rh, Ir, Sn and Pt.

The at least one metal compound is preferably selected from metal halides, metal nitrates, metal sulfates, metal carbonates, metal carboxylates of a carboxylic monoacid or diacid having 1 to 12 carbon atoms, metal β-diketonates, metal carbonyls, metallocenes, or cyclopentadienyl metal complexes including mixed complexes, more preferably from metal carboxylates of a carboxylic monoacid or diacid having 1 to 12 carbon atoms, metal halides, metal nitrates, metal carboxylates, or most preferably from metal carboxylates of a carboxylic monoacid or diacid having 1 to 12 carbon atoms, preferably 1 to 6 carbon atoms or metal β-diketonates such as acetylacetonate.

According to the invention, the target support is preferably an electrically conductive carbon material, selected from carbon, carbon black, graphite or titanium carbide, or titanium nitride..

Ball milling is usually performed in any mill such as attritor mill, Simoloyer-type ball mill, and planetary ball mill, in a frequency range from 200 to 1400 rpm, preferably with balls in a size range from 2 to 20 mm, for a time period from 15 min to 720 min, and the milling vessel and the balls are preferably made of steel, carbides, oxides, nitrides or polymeric materials. Ball milling is performed preferably in a planetary mill in a frequency range from 400 to 600 rpm, with balls in the size range from 5 to 10 mm, for a time period from 1 to 5 hours, and the milling vessel and the balls made of silicon nitride.

The hydrogenation may generally be carried out under a flow of hydrogen in an inert gas with a hydrogen ratio of 5 to 50 vol-%, preferably 10 to 30 vol-%.

Usually, the supported metal catalyst is composed of metal nanoparticles in the average size range of 0.1 to 20 nm, preferably 0.5 to 10 nm deposited onto a support.

In a preferred form of the inventive process, a first metal acetylacetonate, selected from Pd or Pt acetylacetonate, and a second metal acetylacetonate selected from Ni or Co, are subjected to ball milling with carbon, the obtained product is subjected to hydrogenation and finally to an annealing treatment. In said embodiment, the molar ratio of the first metal acetylacetonate to the second metal acetylacetonate is in the range of 1:1 to 5:1, preferably 1:1 to 3:1. The loading of the metal compound such as the metal acetylacetonate on the support should be in the range of 0.5 to 50% by weight, preferably 5 to 40% by weight, more preferred 5 to 15 % by weight, referred to the weight of the support and calculated with any ligand excluded. This means that the metal load is referred to the support of the final product as the organic residue is removed during hydrogenation and/or annealing.

The supported metal catalyst usually possesses a pore structure that resembles the support before the loading with metal nanoparticles but depending on the relative metal loading and treatments operated, and the supported metal catalyst presents highly dispersed metal nanoparticles over the surface area of the support.

The supported metal nanoparticles show said homogeneous metal distribution over the support and, if several metals were used in the claimed synthetic process, the dispersion of both metals is nearly identical.

The supported metal nanoparticles are generally having metal particle sizes that can be adjusted to the intended sizes by changing the annealing temperature in the range of 400 °C to 1200 °C, preferably in the range of 500 °C to 1000 °C.

Thus, the present invention also refers to a supported metallic catalyst which is obtainable according to any form of the inventive process, and to the use of the supported metal catalyst preferably as electrocatalyst, and more preferably for cathode side oxygen reduction reaction (ORR) in PEM fuel cells.

The success of the synthetic method, which is herein reported, lies in the potential of ball milling in achieving homogenous solid mixtures and thus high dispersion levels for an active component.

By applying favourable mixing conditions, it has been observed by the inventors that, when hard and soft, brittle and plastic samples are processed together, the harder component can act as a grinding body towards the soft and plastic one, and thus subject it to activation by means of deformation which will lead to the latter being smeared over the former. This evidence probably represents the phenomenological reason for the success of the mechanochemically induced deposition of metal nanoparticles (soft) over supports such as carbon or oxide supports (hard).

Acetylacetonates have many advantageous physical properties, being a soft molecular material characterized by a low melting point, which would favor their dispersion in combination with a harder component and improve the rheological properties of the solid mixture. Besides, most metal acetylacetonates are inclined to decompose to the metal (autoreduction) upon heating at sufficiently high temperatures (typically above the melting point). In this sense, a material consisting of highly dispersed carbon-supported metal acetylacetonates would represent a promising starting point (pre-catalyst) toward the preparation of carbon-supported metal nanoparticles upon heating. Along these lines, bimetallic formulations of the material are accessible if only different metal acetylacetonates are used at the same time.

The present invention is further illustrated by the attached Figures and the following Experimental Part below. The Figures show in:

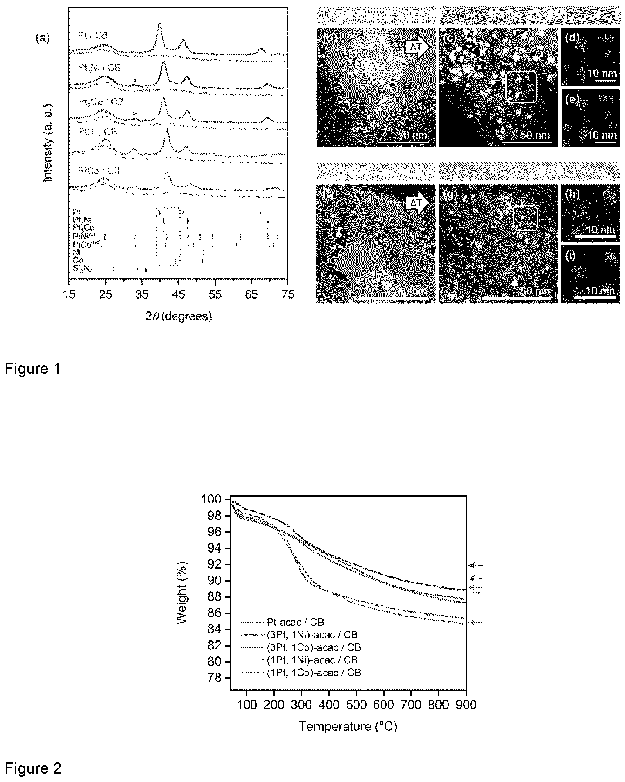

Figure 1: a) Powder XRD patterns of 10 wt % Pt*ₓ*(M)*_{y}* / CB-950 (M = Ø, Ni, Co) superimposed to those of corresponding precursors, (xPt, yM)-acac / CB. The position of the most intense diffraction lines for all the crystalline phases detected in the samples (Iᵣₑₗ >5% for all except Si₃N₄, Iᵣₑₗ >75%) are reported in the lower box (ICDD PDF-2 database). The dashed area collects the diffraction lines generated by the (1 1 1) diffracting planes of all *fcc* metal phases. The asterisks mark additional reflections for minor metallic phases detected (*vide infra*)*.* HAADF-STEM micrographs for (b) (Pt, Ni)-acac / CB and (c) PtNi / CB-950. (d) Ni-K and (e) Pt-L EDX elemental maps measured on PtNi / CB-950 in the area highlighted in (c). HAADF-STEM micrographs for (f) (Pt, Co)-acac / CB and (g) PtCo / CB-950. (h) Co-K and (i) Pt-L EDX elemental maps measured on PtCo / CB-950 in the area highlighted in (g).
Figure 2: TG curves of (xPt, yM)-acac / CB (M = Ø, Ni, Co) measured from 40 to 900 °C under a continuous flow of Ar. The color guide is attached to the plot. The arrows indicate the expected residual weight upon heating up to 900 °C.

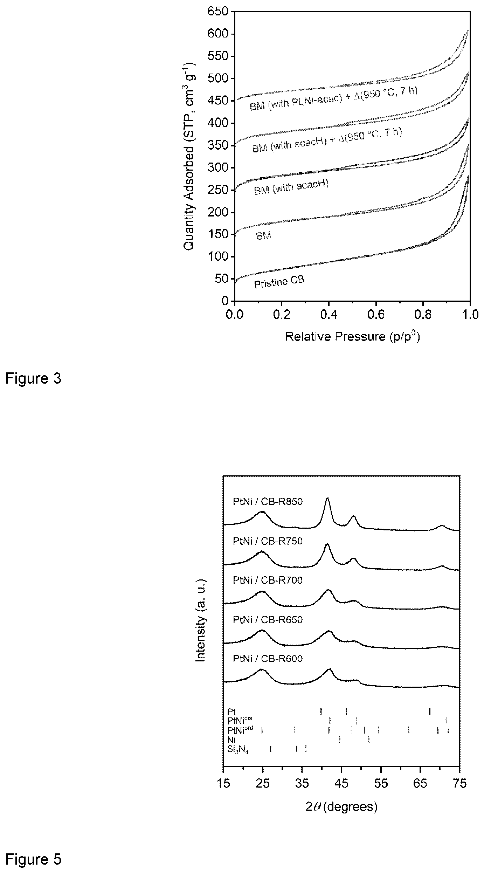

Figure 3: N₂-physisorption isotherms of CB (Vulcan XC72R) as-received, after (dry) ball milling, after ball milling (BM) in the presence of acetylacetone (acacH, 50 µL), after ball milling with acacH followed by thermal treatment at high temperature (950 °C, 7 h), and finally after ball milling with Pt(acac)₂ and Ni(acac)₂ followed by the thermal treatment. The isotherms are plotted with a relative y-offset of +100 cm³ g⁻¹.

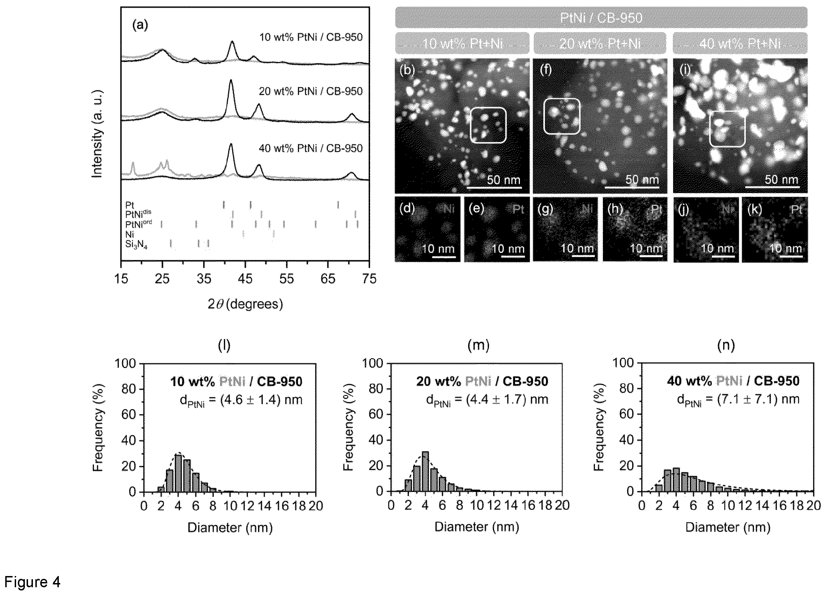

Figure 4: a) From top to bottom, powder XRD patterns of 10, 20, and 40 wt% PtNi / CB-950 obtained from (Pt, Ni)- acac / CB (superimposed grey lines) after annealing at 950 °C for 7 h under Ar atmosphere. The position of the most intense diffraction lines for all the known crystalline phases detected in the samples (Irel > 5% for all except Si₃N₄, Irel > 75%) are reported in the lower box (ICDD PDF-2 database). The unmarked reflections detected for (Pt, Ni)-acac / CB (40 wt% of Pt and Ni relative to CB) are likely determined by the acetylacetonate precursors (intermixed), however, no exact match was found in the database. (b) Representative HAADF-STEM micrograph for 10 wt% PtNi / CB-950 and corresponding (d) Ni-K and (e) Pt-L EDX elemental maps measured in the area highlighted. (f) Representative HAADFSTEM micrograph for 20 wt% PtNi / CB-950 and corresponding (g) Ni-K and (h) Pt-L EDX elemental maps measured in the area highlighted. (i) Representative HAADF-STEM micrograph for 40 wt% PtNi / CB-950 and corresponding (j) Ni-K and (k) Pt-L EDX elemental maps measured in the area highlighted. (I-n) PtNi nanoparticle size distribution (histograms) for 10, 20, and 40 wt% PtNi / CB-950, respectively. For each case, average particle size and standard deviation are reported. For each data set, the superimposed dashed line describes the best fitting lognormal distribution of sizes. All materials were obtained from the thermal annealing of (Pt, Ni)-acac / CB at approximately 950 °C for 7 h under Ar atmosphere.
Figure 5: Powder XRD patterns of 10 wt% PtNi / CB-RXXX obtained from (Pt, Ni)-acac / CB after reduction at 220 °C and annealing at 600, 650, 700, 750, or 850 °C for 7 h. The position of the most intense diffraction lines for all the crystalline phases detected in the samples (Iᵣₑₗ > 5% for all except Si₃N₄, Iᵣₑₗ > 75%) are reported in the lower box (ICDD PDF-2 database);

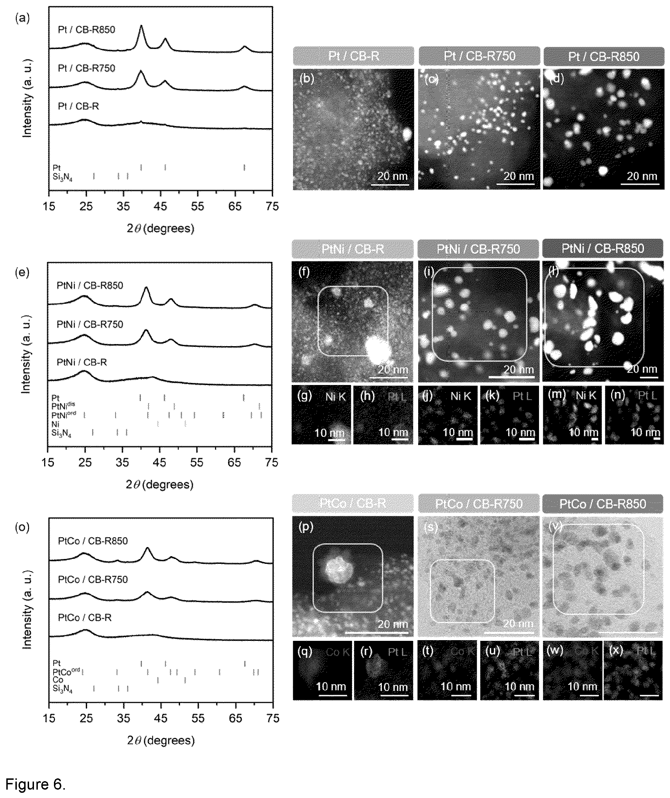

Figure 6: (a-d) Characterization data for 10 wt% Pt / CB-R, -R750, and -R850 obtained from Pt-acac / CB after reduction at 220 °C, reduction and annealing at 750 °C, or 850 °C. (a) Powder XRD patterns. The position of the most intense diffraction lines for all the crystalline phases detected in the samples (Iᵣₑₗ > 5% for all except Si₃N₄, Iᵣₑₗ > 75%) are reported in the lower box (ICDD PDF-2 database). (b-d) HAADF-STEM micrographs. (e-n) Characterization data for 10 wt% PtNi / CB-R, -R750, and -R850 obtained from (Pt, Ni)-acac / CB after reduction at 220 °C, reduction and annealing at 750 °C, or 850 °C. (e) Powder XRD patterns. (f-n) HAADF-STEM micrographs and corresponding Ni K and Pt L EDX elemental maps measured in the area highlighted. (o-x) Characterization data for 10 wt% PtCo / CB-R, -R750, and -R850 obtained from (Pt, Co)-acac / CB after reduction at 220 °C, reduction and annealing at 750 °C, or 850 °C. (e) Powder XRD patterns. (f-n) HAADF-STEM micrographs and corresponding Co K and Pt L EDX elemental maps measured in the area highlighted. (o-x) Characterization data for 10 wt % PtCo/CB-R, - R750, and -R850 obtained from (1Pt, 1Co)-acac/CB after reduction at 220 °C and reduction and annealing at 750 or 850 °C. (o) Powder XRD patterns. (p-x) HAADF-STEM micrographs and corresponding Co-K and Pt-L EDX elemental maps measured in the area highlighted.

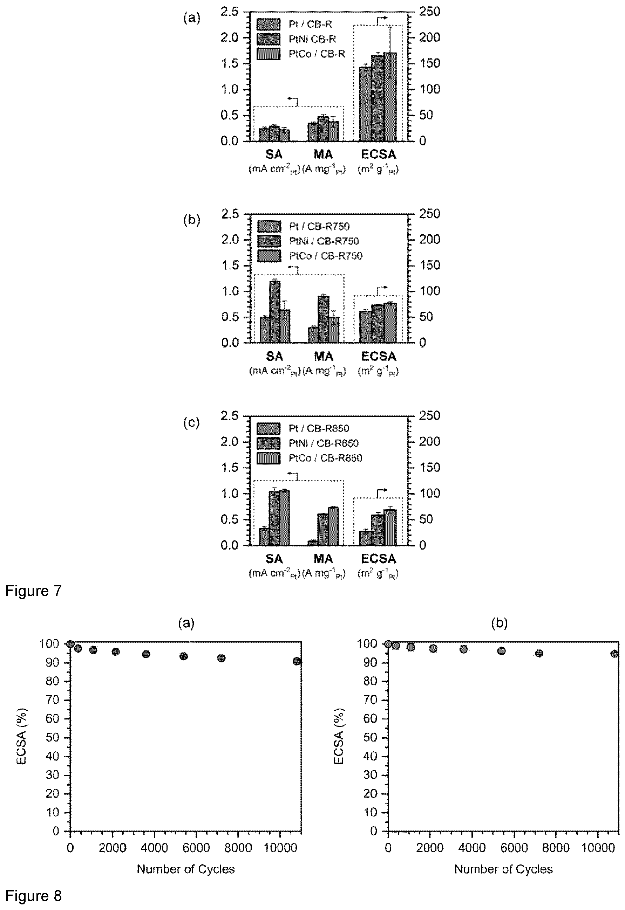

Figure 7: ORR-activity, as specific activity (SA) and mass activity (MA), and electrochemically active surface area for 10 wt% Pt(M) / CB-RXXX (M = Ø, Ni, Co) obtained from (Pt, M)-acac / CB after reduction at 220 °C (a), reduction and annealing at 750 °C (b) or 850 °C (c).
Figure 8: Accelerated degradation protocol based on voltage cycling up to 10 800 load cycles at 1 V s-1 between 0.4 and 1.0 V / RHE applied on PtNi / CB-R750 (a) and PtCo / CB-R850 (b). The degradation test was performed in a N₂-saturated electrolyte without rotation and the ECSA was determined via CO-stripping before and after 360, 1 080, 2 160, 3 600, 5 400, 7 200, and 10 800 load cycles to monitor the change in electrochemically active surface area.

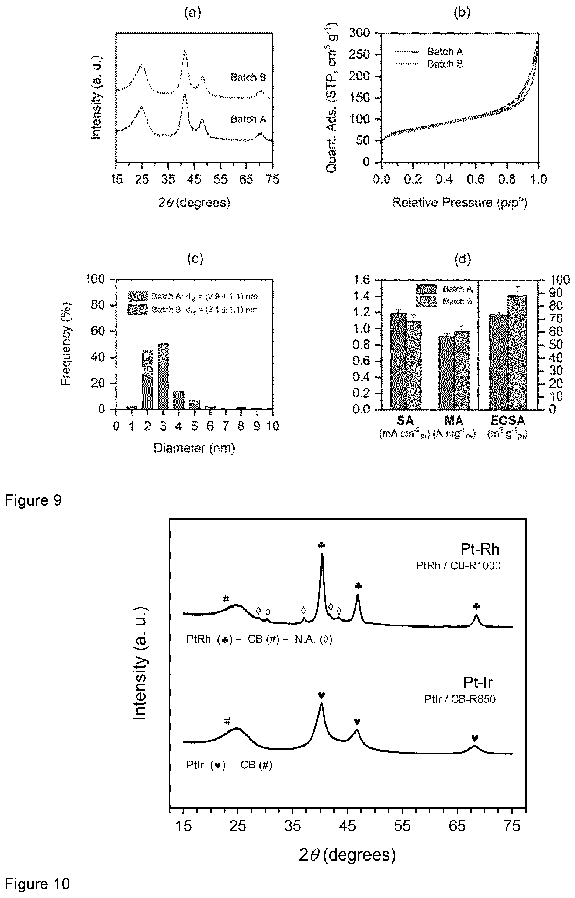

Figure 9: (a-d) Characterization data for two independent batches (A and B) of 10 wt% PtNi / CB-R750 obtained from (Pt, Ni)-acac / CB after reduction at 220 °C and annealing at 750 °C. (a) Powder XRD patterns. (b) N2-physisorption isotherms at -196 °C. (c) Particles size distribution (histograms). (d) ORR-activity as specific activity (SA), mass activity (MA), and electrochemically active surface area (ECSA).
Figure 10. Powder XRD patterns of 10 wt% PtRh / CB-R1000 and PtIr / CB-R850 obtained from (Pt, Rh)-acac / CB and (Pt, Ir)-acac,cod / CB after reduction, annealing, and passivation. The most prominent reflections of the crystalline phases detected are marked with symbols. Not-identified reflections were also detected for phases not available in the ICDD PDF-2 database.

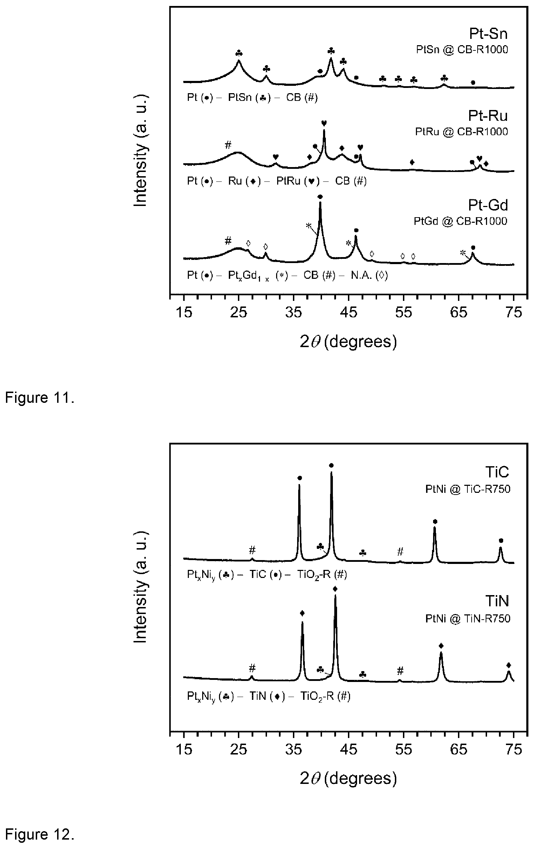

Figure 11. Powder XRD patterns of 10 wt% PtM / CB-R1000 (M = Sn, Ru, Gd) from (Pt, M)-acac / CB, or (Pt, Sn)-acac,AcO / CB with Sn as the second metal, after reduction, annealing, and passivation. The most prominent reflections of the crystalline phases detected are marked with symbols. Not-identified reflections were also detected for phases not available in the ICDD PDF-2 database.
Figure 12. Powder XRD patterns of 10 wt% PtNi / TiC-R750 and 5 wt% PtNi TiN-R750 obtained from (Pt, Ni)-acac / TiC and (Pt, Ni)-acac / TiN after reduction with hydrogen and annealing in an inert atmosphere. The most prominent reflections of the crystalline phases detected are marked with symbols (ICDD PDF-2 database).

For the synthesis of the inventive materials, a silicon nitride jar and balls were exemplarily used. However, use of any other milling materials for jar and balls is generally possible. Particularly, to improve mixing, a 45 mL jar and many small grinding balls were used considering previously reported guidelines on how to maximize mixing (impact) rates in planetary ball mills. Exemplarily, Pt(acac)₂, Ni(acac)₂, and Co(acac)₃ can be used individually or in combination as metal precursors, according to the case. Co(acac)₃ was preferred over Co(acac)₂ because it is known not to release any metal-containing fragments upon heating. Carbon black was selected for the role of supporting material in all cases. As anticipated, different relative metal-to-metal ratios were investigated when bimetallic formulations were explored. However, the target total metal loading was usually maintained around a fixed value (10 wt% relative to carbon) and, similarly, the preparation scale (450 mg of carbon support plus the metal acetylacetonates).

Typically, an exemplary solid mixture, including the metal compound such as metal acetylacetonates and the carbon support, was milled at 600 rpm for 3 h, a time selected to ensure maximum dispersion of the metal precursors on the carbon support. Depending on the system to be synthesized, other milling conditions may be favorable. Indeed, in the described case none of the XRD reflections typical for the acetylacetonate precursors were found after 3 h of treatment (Fig. 1a), indicating that the metal precursors had been successfully dispersed on the carbon support on a sufficiently low scale to prevent their detection via XRD. This notion was further corroborated by direct observation of the metal species distribution across the carbon support at the electron microscope, as reported for the representative case of (Pt, Co)-acac / CB (Fig. 1b) and (Pt, Ni)-acac / CB (Fig. 1c). Possibly, shorter milling periods would be sufficient to attain a similar result, but this option was not investigated in detail.

Interestingly, thermal analysis of the samples (TG-DSC) indicated a reproducible decomposition pattern for all the samples (Fig. 2). In general, the carbon-supported metal acetylacetonates seemingly decompose in one step upon heating above 150 °C under Ar flow (TG), suggesting that the metal acetylacetonates are intimately mixed across the material. This represents a promising result because both homogenous mixing and even distribution of the metal precursors would favor the bottom-up synthesis of (supported) alloy nanoparticles via a subsequent thermal treatment. On the other hand, the weight loss measured at 900 °C positively deviates from the values expected for the sole pyrolysis of the metal complexes (with the ICP-OES analysis of the samples as reference, Tab. 1) in most cases. Possibly, the high-temperature gasification of the carbon support by the action of the metallic components, all well-known gasification catalysts, accounts for the additional weight loss observed for all samples. Along these lines, an increase in the total loading should be observed upon heating at high temperatures.

Notably, annealing at approximately 950 °C for 7 h under flowing Ar leads to the formation of alloy species, as clearly shown from the XRD patterns (Fig. 1a). The XRD reflections typical for the metallic species are now highly pronounced, in obvious contrast with corresponding precursors before the thermal treatment. Most importantly, a systematic shift to higher 2θ-angles from Pt was observed for most of the reflections associated with the bimetallic formulations, depending on the nature of the second metal, the relative amount to Pt, and possible ordering within the alloy, accordingly. This was especially clear for the reflections determined by the diffraction over the (1 1 1) planes of the metallic species being the most intense reflections in all cases. However, additional reflections were also observed due to the formation of ordered intermetallic Pt*ₓ*Ni*_{y}* and Pt*ₓ*Co*_{y}* phases. As a side remark, order-disorder transitions are typically observed when the system is first heated above the transition temperature (e.g., 620 °C for bulk PtNi alloy and 825 °C for PtCo), followed by quenching from the disordered state (below the transition temperature), prolonged annealing, and finally slow cooling to room temperature at an appropriate cooling rate. Both annealing and cooling steps are crucial to attain ordered intermetallic phases. A fortunate combination of annealing temperature and cooling rate was possibly responsible for the occasional formation of PtNi and PtCo ordered phases in our case. These findings, while preliminary, suggest that the composition of the alloy species could be finely tuned via the preparation method herein outlined. Similarly, ordering can potentially be induced by an appropriate annealing and cooling procedure. As anticipated, a moderate increase in the metal loading was observed due to the high-temperature thermal treatment.

The formation of nanosized alloy species was confirmed by direct observation of the nanoparticles at the electron microscope. Particularly, the effect of the thermal treatment on the overall metal distribution is illustrated in Fig. 1b-c and Fig. 1f-g with the example of PtNi / CB-950 and Pt-Co / CB-950, respectively. High-temperature heating indeed resulted in the formation of alloy nanoparticles where Pt and Ni or Co are intimately mixed, as shown by the EDX elemental maps (Fig. 1d-e and Fig. 1h-i). Moreover, despite the elevated annealing temperature used, particles with an average size (diameter) between 4 and 5 nm and a standard deviation lower than 1.5 nm were obtained in all cases. More precisely, all systems show reproducible metal particle size distributions regardless of the specific combination of metals used and their relative amount in the alloy except PtCo / CB-950. Particles of size around 3 nm appeared, in fact, to have a higher probability of forming for the PtCo system, resulting in an average particle size of about 4 nm, so slightly lower than for the other cases.

It is important to note that the synthesis procedure, including mechanochemical mixing and subsequent thermal treatment, did not seem to affect the features of the carbon support as established by investigating the N₂-physisorption behavior of the samples. Overall, the N₂-physisorption isotherms are indeed similar, independently of the treatment to which the materials had been subjected (Fig. 3).

In Table 1, a summary of the characterization results for the 10 wt% Pt*ₓ*M*_{y}* / CB-R950 series of materials obtained from (xPt, yM)-acac / CB precursors (M = Ø, Ni, Co) after annealing at 950 °C is given. The results include elemental composition via ICP-OES and SEM-EDX analysis, textural properties as determined from N₂-physisorption experiments (surface area - SA, external surface area - SA*ₑₓₜ*, micropore volume - *V_{p,micro},* total pore volume - *V_{p,tot}*), average metal particle size (d*_{M}*) and standard deviation (σ*_{d}*) from the electron microscopy studies. For (xPt, yM)-acac / CB, the metal content determined via ICP-OES analysis is reported as found and corrected for the presence of organic ligands (in brackets).

**Table 1**

| Material ID | ICP-OES | | | | | SEM | N₂-physisorption | | | | (S)TEM | |
|---|---|---|---|---|---|---|---|---|---|---|---|---|
| | Pt | Co | Ni | M^{I+II} | Pt:M^{II} | Si | SA | SA*ₑₓₜ* | *V_{p,micro}* | V*_{p,tot}* | d*_{M}* | *σ_{d}* |
| | % | % | % | % | - | % | m² g⁻¹ | m² g⁻¹ | cm³ g⁻¹ | cm³ g⁻¹ | nm | nm |
| Pt-acac / CB | 8.0 (8.7) | - | - | 8.0 (8.7) | - | - | - | - | - | - | - | - |
| **Pt / CB-950** | 9.2 | - | - | 9.2 | - | 0.9 | 357 | 122 | 0.10 | 0.28 | 4.7 | 1.4 |
| (3Pt, Ni)-acac / CB | 7.2 (8.0) | - | 0.7 (0.8) | 7.9 (8.8) | 3.1 | - | - | - | - | - | - | - |
| **Pt₃Ni / CB-950** | 8.4 | - | 0.8 | 9.2 | 3.2 | 0.9 | - | - | - | - | 4.7 | 1.4 |
| (3Pt, Co)-acac / CB | 6.7 (7.5) | 0.8 (0.9) | - | 7.5 (8.4) | 2.5 | - | - | - | - | - | - | - |
| **Pt₃Co / CB-950** | 7.5 | 0.8 | - | 8.3 | 2.8 | 0.8 | - | - | - | - | 4.8 | 1.5 |
| (Pt, Ni)-acac / CB | 6.0 (6.8) | - | 1.6 (1.8) | 7.6 (8.6) | 1.1 | - | - | - | - | - | - | - |
| **PtNi / CB-950** | 7.0 | - | 1.9 | 9.0 | 1.1 | 0.7 | 256 | 103 | 0.07 | 0.23 | 4.6 | 1.4 |
| (Pt, Co)-acac / CB | 5.9 (7.1) | 1.8 (21) | - | 7.7 | 1.0 | - | - | - | - | - | - | - |
| **PtCo / CB-950** | 6.8 | 2.1 | - | 8.9 | 1.0 | 0.6 | 265 | 95 | 0.07 | 0.22 | 4.1 | 1.3 |

The synthesis method was also reproduced using a stainless steel milling jar and balls under similar conditions. However, while ball milling of the metal acetylacetonates with carbon black worked as expected by attaining high levels of dispersion for the metal precursors, the subsequent thermal treatment resulted in the formation of alloy species intermixed with Fe from the abrasion of milling jar and balls in all cases, as clearly pointed out by the powder XRD patterns of resulting materials. Thus, a limited control should be exerted over the composition of alloyed species because varying amounts of Fe were alternatively found in the samples (from 1.6 to 2.3 wt%).

At any rate, by using silicon nitride jars, a material (pre-catalyst) with no contamination from additional catalytically active components (only 0.6 - 0.9 wt% of Si according to SEM-EDX analysis, or 1.0 - 1.5 wt% of Si₃N₄,) is readily obtained. Then, an appropriate thermal treatment leading to the final catalyst material can be carried out. As previously described, prolonged annealing at 900 °C to 1000 °C in particular at 950 °C under inert gas atmosphere, conditions initially selected to ensure alloying of the metal species upon heating, indeed resulted in the formation of Pt, Pt*ₓ*Ni*_{y}*, and Pt*ₓ*Co*_{y}* nanoparticles supported on carbon black. As anticipated, a total metal loading of about 10 wt% was typically used, but higher metal loadings were also explored. Particularly, PtNi-based catalysts were successfully obtained with higher metal loading, i.e., 20 and 40 wt%, as preliminary demonstrated from the XRD characterization of the samples (Fig. 4). However, notwithstanding the nominal composition and promising material features, the catalysts were generally recognized as poorly active in ORR at the RDE setup. A more suitable thermal treatment is necessary to reach the most performant state for the catalyst materials.

To this end, a reduction step at 220 °C in hydrogen was first introduced. Then, the impact of the annealing temperature (7 h, after reduction) was studied in the range from 600 to 850 °C for the Pt-Ni system. In detail, as seen from the XRD characterization of the materials (Fig. 5), alloying of Pt and Ni is complete only at relatively high temperatures within the given time. Indeed, about symmetrical reflections - supporting a statistical distribution of Pt-Ni mixing patterns around the nominal composition - are observed only for the materials annealed for 7 h at 750 and 850 °C. Still, the two materials are not the same, with the one annealed at a higher temperature characterized by larger metal nanoparticles on average, as pointed out by sharper XRD reflections for the PtNi phase. In contrast, annealing at temperatures from 600 to 700 °C was clearly not sufficient to reach a steady-state for the alloying of Pt and Ni, as the contributions from Pt and Ni could be easily detected in the XRD patterns. As a side remark, post-reduction annealing at 750 and 850 °C resulted in the formation of a disordered PtNi phase (PtNi *fcc* solid solution) in both cases and not an ordered intermetallic phase as previously observed.

For a deeper insight into the impact of thermal treatment on material features, a set of nine materials was constructed by taking into account some considerations on the Pt-Ni system and thoroughly characterized. Particularly, the following series of materials was investigated: (a) Pt(M) / CB-R, obtained from the reduction of (1Pt, 1M)-acac / CB (M = Ø, Ni, Co) at 220 °C with hydrogen; (b) Pt(M) / CB-R750, obtained after reduction at 220 °C in hydrogen and annealing at 750 °C in argon; (c) Pt(M) / CB-R850, obtained after reduction at 220 °C in hydrogen and annealing at 850 °C in argon. The results from the characterization of the materials are summarized in Tab. 2.

In Table 2, a summary of the characterization results for the 10 wt% PtM / CB-RXXX series of materials obtained from (1Pt, 1M)-acac / CB (M = Ø, Ni, Co) after reduction at 220 °C (R), reduction, and annealing at 750 °C (R750) or 850 °C (R850). The results include elemental composition via ICP-OES analysis, textural properties as determined from N₂-physisorption experiments (surface area - SA, external surface area - SAₑₓₜ, micropore volume - V_{p.micro}, total pore volume - V_{p,tot}), number-averaged metal particle size (d*_{M}*) and standard deviation (σ_{d}) from electron microscopy studies.

**Table 2**

| Material ID | ICP-OES | | | | | N₂-physisorption | | | | (S)TEM | |
|---|---|---|---|---|---|---|---|---|---|---|---|
| | Pt | Co | Ni | M^{I+II} | Pt:M^{II} | SA | SAext | *V_{p,micro}* | *V_{p,tot}* | D*_{M}* | *σ_{d}* |
| | % | % | % | % | - | m² g⁻¹ | m² g⁻¹ | cm³ g⁻¹ | cm³ g⁻¹ | nm | Nm |
| **Pt-acac / CB** | 8.0 | - | - | 8.0 | - | - | - | - | - | - | - |
| **(1Pt, 1Co)-acac / CB** | 5.9 | 1.8 | - | 7.7 | 1.0 | - | - | - | - | - | - |
| **(1Pt, 1Ni)-acac / CB** | 6.0 | - | 1.6 | 7.6 | 1.1 | - | - | - | - | - | - |
| **(1Pt, 1Ni)-acac / CB** rep. | 5.9 | - | 1.6 | 7.5 | 1.1 | - | - | - | - | - | - |
| **Pt / CB-R** | 8.1 | - | - | 8.1 | - | 281 | 129 | 0.07 | 0.25 | 1.2 | 0.3 |
| **PtCo / CB-R** | 6.7 | 1.8 | - | 8.5 | 1.1 | 215 | 106 | 0.05 | 0.21 | 1.3 | 0.8 |
| **PtNi / CB-R** | 6.7 | - | 2.1 | 8.8 | 1.0 | 195 | 103 | 0.04 | 0.21 | 1.3 | 0.8 |
| **Pt** / **CB-R750** | 10.5 | - | - | 10.5 | - | 316 | 187 | 0.06 | 0.30 | 3.1 | 1.6 |
| **PtCo / CB-R750** | 7.8 | 2.5 | - | 10.3 | 1.0 | 250 | 110 | 0.06 | 0.22 | 2.5 | 0.9 |
| **PtNi** / **CB-R750** | 7.8 | - | 2.2 | 10.0 | 1.1 | 271 | 138 | 0.05 | 0.28 | 2.9 | 1.1 |
| **PtNi** / **CB-R750** rep. | 7.5 | - | 2.2 | 9.7 | 1.0 | 268 | 149 | 0.05 | 0.28 | 3.1 | 1.1 |
| **Pt / CB-R850** | 9.1 | - | - | 9.1 | - | 354 | 129 | 0.10 | 0.27 | 3.8 | 1.1 |
| **PtCo / CB-R850** | 7.2 | 2.2 | - | 9.4 | 1.0 | 275 | 110 | 0.07 | 0.23 | 3.5 | 1.2 |
| **PtNi / CB-R850** | 7.2 | - | 2.0 | 9.2 | 1.1 | 258 | 120 | 0.06 | 0.24 | 3.7 | 0.8 |
| **CB (Vulcan XC72R)** | - | - | - | - | - | 251 | 182 | 0.03 | 0.28 | - | - |

As shown in Fig. 6a, Fig. 6e, and Fig. 6o, the XRD patterns of the materials obtained after reduction at 220 °C in hydrogen are mostly dominated by broad reflections from the carbon support. However, in contrast with as-milled powders (Fig. 1a), an additional feature can easily be detected around the position typical for Pt and corresponding alloys, pointing at the existence of metallic species as represented by small coherently scattering domains. Furthermore, specifically for the case of Pt / CB-R, weak but undoubtedly sharp reflections are seen in a position consistent with Pt metal, which would imply a heterogeneous metal particle size distribution including a small share of larger particles. Previous observations were corroborated by direct observation of the metals distribution under the electron microscope (Fig. 6b, Fig. 6f, and Fig. 6p). In general, particles of about 1 nm were predominantly found but occasionally particles as large as 10 nm were also observed. Due to the extreme dispersion of the metallic species, the intense interaction of the electron beam with the metal nanoparticles prevented the recording of meaningful EDX maps for PtNi / CB-R and PtCo / CB-R. With these premises, the EDX line scans measured on the same samples are considered more reliable. At any rate, the data is consistent and indicates the presence of highly dispersed Pt and Ni or Pt and Co species, according to the case.

After annealing, the powder XRD patterns show instead the characteristic reflections for Pt, PtNi (disordered), and PtCo (ordered), as expected (Fig. 6e). No additional metallic phases could be easily detected in addition to the target species after annealing at 750 and 850 °C. As before, the materials annealed at 750 and 850 °C (after reduction) were not the same. Increasingly narrow reflections for the metallic components when moving to higher temperatures were found as consistent with the sintering of the metal nanoparticles. Indeed, average particle sizes of about 3 nm were measured in the case of Pt(M) / CB-R750 and around 4 nm for Pt(M) / CB-R850 independently from their nominal composition. Most importantly, according to the EDX elemental maps, Pt and Ni or Pt and Co were alternatively found in the same spatial position supporting the formation of alloy species (Fig. 6i-k and Fig. 6s-u).

Powder X-ray diffraction, electron microscopy, nitrogen sorption, and thermal analysis were used to characterize as-synthesized materials. The method was used to synthesize several PtNi- and PtCo-based catalysts for the ORR with carbon black as support. In addition, Pt-only containing materials were also synthesized for comparative purposes. The method proved versatile concerning total metal loading (e.g., 10, 20, and 40 wt%) and metal-to-metal relative composition (e.g., Pt-to-M of 1 and 3 with M = Ni or Co), enabling the synthesis of a more extensive set of materials. The key feature of the method lies in the exceptional level of dispersion achieved upon ball milling for the metal precursor, which led to relatively narrow size distributions of supported alloy nanoparticles (average size under 5 nm). Most importantly, the materials were tested in the ORR on a rotating disc electrode (RDE) and demonstrated to be highly active with specific activities (SA) of 1.2 mA cm⁻²_{Pt} and mass activities (MA) of 0.9 A mg⁻¹_{Pt} for PtNi supported on carbon black.

All the materials were also investigated by N₂-physisorption. As previously discussed, the porosity of the carbon support was not affected either by ball milling or the subsequent thermal treatment, so that similar N₂-physisorption isotherms were obtained independently from the specific thermal treatment applied to the materials.

As shown in Fig. 7a, after reduction at 220 °C, all the materials are characterized by high values of specific active surface area (relative to the amount of Pt) of approximately 150 m² g⁻¹_{Pt}, as determined by CO-stripping. The results are consistent with the average metal particle size of about 1 nm found for all the materials independently from their nominal composition and further corroborated the high degree of metal dispersion attained upon ball milling. However, accordingly, the activities of all the catalysts in ORR are comparably poor, most likely due to the small metal particle size and possibly incomplete alloying. The effect of metal particle size on the ORR activity is a long-standing question in the literature. Its understanding has been prevented mainly by differences in the conditions under which the electrochemical analyses were carried out, average interparticle distances, individual particle geometries, or other grounds. Still, strong indications exist that particles sizes below 2 nm should result in decreased ORR activity for Pt. For instance, experimental findings supported by DFT calculations indicated a 4-fold decrease in specific activity for a reduction in average particle size from 2.2 nm to 1.3 nm. This effect was attributed to an increase in the oxygen binding strength expected when moving to smaller Pt particle sizes. Nonetheless, concerning stability, a clear consensus exists that Pt particles smaller than 2 nm are insufficiently stable for the application in PEMFCs, being more prone to dissolve under typical reaction conditions.

After annealing at 750 °C, the average particle size increases to approximately 3 nm, as reflected by the ECSAs of the materials, which set around 70 m² g⁻¹_{Pt} (Fig. 7b). Accordingly, for Pt and PtNi-based catalysts, high specific activities were measured, i.e., about 0.49 mA cm⁻²_{Pt} for Pt and 1.2 mA cm⁻²_{Pt} for PtNi. On the other hand, PtCo / CB-R750 showed relatively low ORR-activity, i.e., 0.64 mA cm⁻²_{Pt}, although similar ECSA values were determined. This would suggest partial alloying of Pt with Co and thus incomplete formation of the most active PtCo phase. Along these lines, a large dispersion of Pt*ₓ*Co*_{y}* species could account for the broad diffraction lines observed for the Pt*ₓ*Co*_{y}* phases (Fig. 6o), in addition to the contribution from crystallite size effects, which was initially assumed as dominant. This notion was corroborated by the EDX maps and line scans measured across the sample, reporting on strongly fluctuating levels of Pt and Co.

Conceivably, annealing temperatures as high as 850 °C are more suitable for the formation of PtCo intermetallic phases, compatible with the Pt-Co phase diagram. Indeed, the order-disorder transition for PtCo bulk alloys is expected at temperatures as high as 825 °C, as beforehand mentioned. Accordingly, enhanced ORR-activity was observed for the material resulting from annealing at 850 °C (Fig. 7c). Particularly, a relatively high specific ORR-activity of about 1.1 mA cm⁻²_{Pt} was measured for PtCo / CB-R850, although ECSAs were in the same range as for PtCo / CB-R750 (Tab. 3). In contrast, PtNi / CB-R850 and Pt / CB-R850 appeared to be less active than the corresponding counterparts annealed at 750 °C. However, if for the Pt-Ni system, the lowered activity can be directly attributed to the increase of the average metal particle size, in the case of Pt / CB-R850, this same evidence cannot be solely explained by the sintering of metal nanoparticles because the average Pt particle size and ECSA values are inconsistent, i.e., an average particle size of about 3.8 nm is not consistent with ECSA as low as 27 m² g⁻¹_{Pt} for Pt / CB-R850. Probably, restructuring of the carbon at such high temperatures implies the formation of carbon overlayers around the metal nanoparticles, significantly reducing the available surface area for the ORR.

In Table 3, the ORR-activity (as specific activity - SA and mass activity - MA) and electrochemically active surface area (ECSA) of 10 wt% Pt(M) / CB-950 (M = Ø, Ni, Co) after activation are shown.

**Table 3**

| Material ID | RDE Characterization | | |
|---|---|---|---|
| | SA | MA | ECSA |
| | mA cm⁻²_{Pt} | A g⁻¹_{Pt} | m² g⁻¹ |
| **Pt / CB-R** | 0.24 ± 0.03 | 0.34 ± 0.03 | 143 ± 6 |
| **PtCo / CB-R** | 0.22 ± 0.05 | 0.37 ± 0.10 | 171 ± 49 |
| **PtNi / CB-R** | 0.29 ± 0.03 | 0.47 ± 0.05 | 165 ± 7 |
| **Pt / CB-R750** | 0.49 ± 0.04 | 0.30 ± 0.03 | 61 ± 4 |
| **PtCo / CB-R750** | 0.64 ± 0.17 | 0.49 ± 0.13 | 77 ± 3 |
| **PtNi** / **CB-R750** | 1.19 ± 0.05 | 0.90 ± 0.04 | 73 ± 2 |
| **PtNi** / **CB-R750** rep. | 1.09 ± 0.08 | 0.96 ± 0.07 | 88 ± 7 |
| **Pt / CB-R850** | 0.33 ± 0.04 | 0.09 ± 0.02 | 27 ± 5 |
| **PtCo / CB-R850** | 1.06 ± 0.03 | 0.73 ± 0.05 | 69 ± 6 |
| **PtNi / CB-R850** | 1.04 ± 0.08 | 0.61 ± 0.01 | 59 ± 5 |

To sum up, these highly active systems were obtained through the mechanochemically-assisted synthesis procedure upon the simple variation of the annealing temperature after reduction. Particularly, Pt / CB-R750, PtNi / CB-R750, and PtCo / CB-R850 showed activities on the higher side of the spectrum of values reported in the literature. The SA of 1.2 mA cm⁻²_{Pt} and MA of 0.9 A mg⁻¹_{Pt} measured in the case of PtNi / CB-R750, for instance, are indeed rarely surpassed if not only by shape- or morphology-controlled systems, whose stability, though, is often in question. Conversely, the catalysts herein presented possess no controlled morphology and thus resemble industrially established PEMFC catalysts so that similar stability would be expected. Indeed, exemplary stability was recognized for PtCo / CB-R850, corroborating the expected resistance towards degradation in the common potential range (Fig. 8). To confirm the high activity of PtNi / CB-R750, we further performed a full reproduction of the synthesis and all characterization techniques, including electrochemical evaluation (Fig. 9). As anticipated, the differences between the two materials are negligible, proving a reproducible preparation. Finally, even though Pt(M) / CB-R (M = Ø, Ni, Co) show low activity and stability for the application in PEMFCs, the existence of a bottom-up approach of such simplicity for the synthesis of nanoparticles with sizes of about 1 nm is relevant for other catalysis applications.

The solid-state procedure herein reported, including mechanochemical mixing and a follow-up thermal treatment, enables the dry synthesis of supported bimetallic catalysts over a wide range of compositions. The key feature of the process lies in the exceptional level of dispersion achieved upon ball milling for the metal precursor(s), which eventually led to the formation of relatively narrow size distributions of supported alloy nanoparticles during the subsequent thermal treatment. Most importantly, the resulting metal nanoparticles are also strikingly pure in their metal composition, as no unalloyed species could be detected either from XRD or TEM-EDX investigation. For each targeted composition, PtM / CB (M = Ni, Co), highly active ORR catalysts were obtained from the mere variation of annealing temperature after reduction.

Due to its simplicity and flexibility, the inventors expect the synthesis method to be applied beyond the field of ORR catalysis within a short period. Indeed, the inventors see no reason why the same preparation approach should not be applied to the synthesis of supported nanoparticles, including other compatible combinations of metals and supports, and thus be exploited for many different applications.

### Experimental Part

### Characterization Methods

### Powder X-ray Diffraction

The X-ray diffraction (XRD) data were recorded on a Stoe STADI P diffractometer operating in Bragg-Brentano geometry (CuKα_{1,2}: 1.541 862 Å) equipped with a secondary graphite monochromator. The samples were placed on a Silicon background free sample holder, and data were collected continuously in the 15 to 75° 2θ-range at a scan speed of 0.6° min⁻¹ (step size, 0.1°) with a proportional gas point detector. The measured patterns were evaluated qualitatively by comparison with entries from the ICDD PDF-2 database.

### Thermal Analysis

Simultaneous thermal analysis (thermogravimetry, TG, and differential scanning calorimetry, DSC) coupled with mass spectrometry (MS) was carried out on a Netzsch STA 449 F3 Jupiter thermal analysis instrument connected to a Netzsch QMS 403 D Aeolos mass spectrometer. The samples (approx. 10 mg) were heated from 40 to 900 °C (heating rate, 10 °C min⁻¹) in a continuous flow of Ar (40 mL min⁻¹).

### Nitrogen Physisorption

Nitrogen adsorption isotherms were recorded using a Micromeritics 3Flex instrument. The apparent specific surface area was estimated by applying the Brunauer-Emmet-Taylor (BET) algorithm. The t-plot method was applied to determine the micropore volume and external surface area. Carbon Black STSA was used as the thickness curve. The total pore volume was determined at 0.95 p/p₀ using the Gurvich rule. All methods used are comprehensively reviewed in the literature.

### Electron Microscopy

High-angle annular dark-field scanning-transmission electron (HAADF-STEM) micrographs and energy-dispersive X-ray spectroscopy (EDX) elemental maps were acquired on a Cs probe-corrected Hitachi HD-2700 microscope equipped with a cold field emission gun and two EDAX Octane T Ultra W EDX detectors at an acceleration voltage of 200 kV. In addition, conventional high-resolution transmission electron (HR-TEM) micrographs were collected with this same machine. Finally, scanning mode imaging was also performed. The samples were usually prepared by sprinkling dry specimen on the TEM grid. In all cases, the particle size distribution was determined by estimating the diameters of at least 200 particles from several images of the same sample. Elemental composition was determined via energy-dispersive X-ray (EDX) bulk analysis, performed on a Hitachi TM3030 PLUS table-top scanning electron microscope (SEM) equipped with an Xplore Compact 30 detector from Oxford Instruments and operated at an acceleration voltage of 15 kV. All the samples for SEM-EDX measurements were prepared by sprinkling dry specimen on a C-film.

### Elemental Analysis (ICP-OES)

Inductively coupled plasma optical emission spectroscopy (ICP-OES) analyses were performed on a Spectrogreen FMX 46 using an UVPlus Optic ORCA (Optimized Rowland Circle Alignment) optic system. The emission wavelengths for the individual metals used for the individual metals are summarized in Tab. 4. The loadings were determined by averaging the concentrations evaluated using the different wavelengths.

**Table 4. Summary of wavelengths used to evaluate metal concentrations during the ICP-OES measurement.**

| Metal | Pt | Co | Ni | Fe |
|---|---|---|---|---|
| Wavelengths (nm) | 214.423 | 228.616 | 231.604 | 259.941 |
| | 177.708 | 238.892 | 221.648 | 238.204 |
| | 299.797 | | | |

To prepare liquid samples for measurement, approximately 10 mg of catalyst was leached in a mixture of 7.5 mL HCI, 2.5 mL HNO₃ and 0.8 mL H₂O₂. The suspension was heated at 180 °C in an Anton Paar Multiwave 5000 microwave oven for 5 min, after which it was allowed to cool down to ambient temperature naturally. Then, after diluting to 50 mL with mQ water and stirring overnight, the analysis was carried out, and metal concentrations were evaluated. Across the entire procedure, sample weights were measured using a Mettler Toledo XA205 Dual range and a Sartorius Entris II.

### Materials

Platinum(II) acetylacetonate and cobalt(III) acetylacetonate were purchased from Alfa Aesar. Nickel(II) acetylacetonate and acetylacetone were purchased from Sigma Aldrich. Vulcan XC-72R was purchased from Cabot. All chemicals were used as received without further purification.

### Methods

### Synthesis of (Pt, M)-acac / C (M = Ø, Ni, Co)

All preparations were carried out using a Fritsch planetary micro mills Pulverisette P7 (classic line). A 45 mL silicon nitride jar was loaded with carbon black (CB), Pt(acac)₂, and on occasion, a second metal acetylacetonate precursor between Ni(acac)₂ and Co(acac)₃. Typically, the synthesis targeted a final overall metal loading of 10 wt% (organic ligand excluded). Thus, 450 mg of CB were used and combined with the exact amount of metal acetylacetonates. When Pt(acac)₂ was combined with Ni(acac)₂ or Co(acac)₃, a Pt-to-M molar ratio of 1 and 3 were alternatively used in each case. The solid mixture was then milled for 3 h using 5 mm Ø silicon nitride grinding balls (17 g in total for 80 balls) at 600 rpm. Some preparations were repeated with a 45 mL stainless steel jar under similar conditions, including the number and size of grinding balls (80 stainless steel balls of 5 mm Ø in size for 35 g in total), frequency (600 rpm), and milling time (3 h). For synthesis where 20 and 40 wt% overall metal loading (organic ligand excluded) were instead targeted, milling was carried out for 12 h using the same amount of grinding balls (17 g in total for 80 silicon nitride balls) at 500 rpm. Every time, the milling program implied the repetition of the same two steps cyclically - first, 15 min of milling at the selected frequency, then a 5 min break - until the target milling time was finally cumulated. Rotation was inverted when moving from one repetition to the other to improve the homogeneity of the treatment. At the end of the milling program, the material was scratched out of the milling jar and thus recovered in nearly quantitative yield. Blank experiments to investigate the effect of milling on the bare support (500 mg of CB) were also performed with or without acetylacetone (acacH, 50 µL) to simulate the presence of metal acetylacetonates. All preparations were repeated at least twice to assess reproducibility.

### Synthesis of PtM / C (M = Ø, Ni, Co)

(Pt, M)-acac / C (M = Ø, Ni, Co) was transferred to a suitable crucible and subjected to thermal treatment in a tubular oven. Typically, the thermal treatment implied: (a) reduction at 220 °C (heating rate, 3 °C min⁻¹) for 90 min in hydrogen flow (200 mL min⁻¹ of 20 vol-% H₂ in Ar) and (b) annealing in argon flow (100 mL min⁻¹ of Ar) at 750 °C or 850 °C (heating rate, 5 °C min⁻¹) for 7 h. However, the study sometimes required that only reduction or thermal annealing were alternatively used to prepare the samples. Furthermore, alternative annealing temperatures were also explored, including 600 °C, 650 °C, 700 °C, and 950 °C, while all other parameters were kept the same. Every time, at the end of the treatment, the system was allowed to cool down to room temperature naturally. Finally, before recovering, all the materials were passivated with increasingly concentrated mixtures of synthetic air in argon, as follows: (a) 1 vol-% synthetic air in Ar for 30 min at 100 mL min⁻¹; (b) 5 vol-% synthetic air in Ar for 30 min at 100 mL min⁻¹. All preparations were repeated at least twice to assess reproducibility. Considering the different conditions applied for the synthesis of the materials via thermal annealing, including the combination of steps and annealing temperatures, the materials will be designated with a notation PtM / CB - RXXX (M = Ø, Ni, Co), with R describing whether they were reduced (or not, in its absence), and XXX standing for the annealing temperature. For example, PtNi / CB - R750 identifies PtNi nanoparticles supported on carbon black that underwent reduction as described, followed by annealing at 750 °C for 7 h. Similarly, PtNi / CB - 950 did not undergo reduction and was directly annealed in argon flow at 950 °C for 7 h.

### Synthesis of PtRh / CB-R1000

For the synthesis of PtRh / CB-R1000, Pt(acac)₂ and Rh(acac)₃ were ball milled in equimolar amounts (10 wt% Pt and Rh, ligands excluded) with CB at 600 rpm for 3 hours using a silicon nitride jar and balls. Milling was carried out under the same conditions to obtain (Pt, Ni)-acac / CB. Next, the milled powder was reduced with hydrogen (20% H₂ in Ar at 200 mL/min; 220°C, 3 °C/min, 90 min), annealed in argon flow (100 mL/min; 1000 °C, 5 °C/min, 10 hours), and then passivated in a tubular oven. According to the XRD pattern shown in Fig. 10, the process results in Pt-Rh alloyed species with a relative composition close to the target value, likely supported on CB.

### Synthesis of Ptlr / CB-R850

For the synthesis PtIr/ CB-R850, milling was carried out under the same conditions to obtain PtRh / CB-R1000, except that [Ir(cod)(acac)] was used as the precursor of iridium. Next, the milled powder was reduced with hydrogen (20% H₂ in Ar, 200 mL/min; 220°C, 3 °C/min, 90 min), annealed in argon (100 mL/min; 850 °C, 5 °C/min, 12 hours), and then passivated in a tubular oven. According to the XRD pattern, the process results in Pt-Ir alloyed species with a relative composition close to the target value, likely supported on CB.

### Synthesis of PtM / CB-R1000 (M = Sn, Ru),

For the synthesis PtM / CB-R1000 (M = Sn, Ru), milling was carried out under the same conditions to obtain PtRh / CB-R1000. According to the case, the precursor of the second metal was Sn(OAc)₂ (read tin(ll) acetate) and Ru(acac)3. Pt(acac)₂ and the second metal precursor were mixed in equimolar amounts (10 wt% Pt + M, ligands excluded). After milling, the material was reduced with hydrogen (20% H₂ in Ar, 200 mL/min; 220°C, 3 °C/min, 90 min), annealed in argon (100 mL/min; 1000 °C, 5 °C/min, 10 hours), and then passivated in a tubular oven. According to the XRD pattern shown in Fig.11, the process results in the formation of alloyed species (dominant phase) with a relative composition close to the target value in the case of Pt-Sn and Pt-Ru. However, the monometallic species were also detected, particularly Pt in the case of the Pt-Sn system, Pt and Ru for Pt-Ru.

### Synthesis of PtNi / TiC-R750 and 5 wt% PtNi / TiN-R750

For the synthesis 10 wt% PtNi / TiC-R750 and 5 wt% PtNi / TiN-R750, milling was carried out with silicon nitride jars and balls as before. Pt(acac)₂ and Ni(acac)₂ were mixed in equimolar amounts with TiC and TiN (5-10 wt% Pt + Ni, ligand excluded). After milling, the material was reduced with hydrogen (20% H₂ in Ar, 200 mL/min; 220°C, 3 °C/min, 90 min), annealed in argon (100 mL/min; 750 °C, 5 °C/min, 7 hours), and then passivated in a tubular oven. According to the XRD pattern shown in Fig. 12, the process results in the formation of highly dispersed Pt and Ni species, but some alloying was observed. Elemental mapping via electron microscopy indicated that Pt and Ni form segregated supported nanoparticles.

### Electrochemical Measurements

The specific activity (SA) and mass activity (MA) towards ORR, as well as the electrochemical surface area (ECSA), were determined from electrochemical half cell measurements. These measurements were conducted in a three-electrode compartment Teflon cell using a rotating disk electrode (RDE) setup equipped with either a Radiometer Analytical rotation controller or an Origalys Origatrod radiometer and a Gamry Reference 600 potentiostat. A graphite rod was used as the counter electrode and a double junction Ag / AgCl (3 M KCI, Metrohm) electrode as the reference electrode. The cell compartment of the reference electrode was additionally separated with a Nafion membrane to avoid the leaching of chloride ions during activity and stability measurements. All potentials in this work are given with respect to the reversible hydrogen electrode (RHE). To ensure an accurate correction for the Ag / AgCl electrode potential, the potential was measured with the aid of a Pt electrode in an H₂-saturated electrolyte beforehand. This procedure was repeated for every activity and stability measurement with the tested Pt-based ORR catalysts as RHE.

Catalyst films were prepared by first dispersing the catalyst powders in ultrapure water (VWR) using an ultrasonic vial treater. Then, after an initial treatment of 30 min (10 min, when the dispersion was reused), a 20 µL ink droplet was pipetted onto a freshly polished glassy carbon disk electrode with a diameter of 5 mm (0.196 cm² geometrical surface area), embedded in a Teflon shell, and finally dried in air. The amount of catalyst on the electrode was in the 5 to 20 µg cm⁻² range according to the platinum loading relative to the carbon support and dispersion (see Tab. 5). Thereby, reproducible film thicknesses were obtained to ensure proper analysis and comparable results. For both activity and stability measurements, 0.1 M HCIO₄ (prepared by diluting 70% HCIO₄, Ultrapure, Carl Roth, with ultrapure water) was used as the electrolyte. The ohmic drop was corrected via positive feedback in order to have residual uncompensated resistance below 3 Ω.

Before each activity and stability measurement, the catalysts were subjected to 200-300 cleaning cycles (0.05 - 1.0 V or 0.05 - 1.4 V) in N₂-saturated electrolyte until a stable cyclovoltammogram (CV) was recorded. During this step, carbon impurities are removed from the surface. For more details on the activation, refer to Tab. 5. ORR activities were calculated at 0.9 V / RHE and a rotating frequency of 1600 rpm from the anodic scan of CVs recorded in O₂-saturated electrolyte with a scan rate of 50 mV s⁻¹. To isolate the current related to oxygen reduction, the CVs were corrected for capacitive processes by subtracting a CV recorded in Argon. The ORR activity measurements were carried out according to the guidelines reported in the literature. ⁶⁵ The specific activity (SA) is given as the kinetic current density normalized to the real surface area, which was derived from the electrochemical CO-oxidation charge. To this end, the peak of the CO-stripping CV was integrated after subtraction of a CV recorded in N₂-saturated electrolyte to correct for non-faradic contributions. The electrochemical surface area (ECSA) was calculated assuming a surface charge density of 380 µC cm⁻²_{Pt}. The mass activity (MA) was derived from SA and ECSA. The stability measurement consisted of an accelerated degradation protocol based on voltage cycling with a total of 10 800 CVs at 1 V s⁻¹ between 0.4 and 1.0 V/RHE. The degradation test was performed in N₂-saturated electrolyte without rotation and the ECSA was determined via CO-stripping by comparison of the results before and after 360, 1 080, 2 160, 3 600, 5 400, 7 200, and 10 800 load cycles, respectively, to monitor the change in surface area.

**Table 5. Catalyst loadings on electrode according to average metal particle size (d_{M}) and Pt-loading (ICP-OES). For the activation via CVs, the lower potential limit was 0.05 V / RHE and the upper potential limit is given, respectively.**

| Composition | d*_{M}* nm | Pt Load. % | Cat. Load. µg cm⁻² | Activation |
|---|---|---|---|---|
| PtCo / CB-R | 1.3 ± 0.8 | 6.74 | 5 | 200 CV (1.0 V) |
| PtNi / CB-R | 1.3 ± 0.8 | 6.66 | 5 | 200 CV (1.0 V) |
| Pt / CB-R | 1.2 ± 0.3 | 8.13 | 7.5 | 200 CV (1.0 V) |
| PtCo / CB-R750 | 2.5 ± 0.9 | 7.84 | 10 | 200 CV (1.4 V) |
| PtNi / CB-R750 | 2.9 ± 1.1 | 7.82 | 10 | 200 CV (1.4 V) |
| Pt / CB-R750 | 3.1 ± 0.6 | 10.5 | 15-17 | 200 CV (1.4 V) |
| PtNi / CB-R750 rep. | 3.1 ± 1.1 | 7.49 | 10 | 200 CV (1.4 V) |
| PtCo / CB-R850 | 3.5 ± 1.2 | 7.20 | 10 | 200 CV (1.4 V) |
| PtNi / CB-R850 | 3.7 ± 0.8 | 7.23 | 10 | 200 CV (1.4 V) |
| Pt / CB-R850 | 3.8 ± 1.1 | 9.05 | 15-20 | 300 CV (1.4 V) |

As shown above, the inventive process for preparing a supported metallic catalyst, in particular a bimetallic supported catalyst, results in inventive catalysts combining high stability with unique electronic and structural properties. The inventors offer a mechanochemistry-assisted two-step, dry, and potentially scalable methodology as an alternative synthetic route to supported metal catalysts. First, metal salts are dispersed on a support in a planetary ball mill. Subsequently, the mixture is reduced and annealed to yield supported alloyed nanoparticles. By applying the present procedure to the synthesis of PtM / C (M = Ni, Co), typical catalysts for the oxygen reduction reaction, the inventors demonstrate that particle size, composition, and loading can be finely adjusted, ultimately leading to highly performant catalysts.

## Claims

1. Process for preparing a supported metal catalyst wherein, in a first step, at least one metal compound is subjected to ball milling with an electrically conductive support which is selected from electrically conductive carbon materials such as carbon, graphite, carbon black, titanium carbide, or from titanium nitride, boron nitride, niobium nitride, indium tin oxide and antimony tin oxide, preferably carbon, titanium nitride, boron nitride, more preferably carbon, and, in a second step, the product of the first step is hydrogenated under a H₂ pressure of 1 to 10 atm in a temperature range from 100°C to 500°C for a time period of 1 to 3 hours and, in an optional third step, the product of the second step is annealed under a protective gas atmosphere in a temperature range from 400°C to 1200°C for a time period of 2 to 12 hours,
wherein the metal of the at least one metal compound is selected from at least one catalytically active metal selected from Fe, Co, Ni, Ru, Rh, Ir, Sn and Pt.

2. Process according to claim 1 wherein the at least one metal compound is selected from metal halides, metal nitrates, metal sulfates, metal carbonates, metal carboxylates of a carboxylic acid having 1 to 12 carbon atoms, metal β-diketonates, metal carbonyls, metallocenes, or cyclopentadienyl metal complexes, preferably from metal carboxylates of a carboxylic monoacid or diacid having 1 to 12 carbon atoms, particularly 1 to 6 carbon atoms, metal halides, metal nitrates, metal carboxylates, or more preferably from metal carboxylates of a carboxylic monoacid or diacid having 1 to 12 carbon atoms, particularly 1 to 6 carbon atoms, or metal β-diketonates such as acetyl acetonate.

3. Process according to any one of claims 1 to 2 wherein the loading of the metal compound on the support is in the range of 0.5 to 50% by weight, preferably 5 to 40% by weight, more preferrably 5 to 15 % by weight, referred to the support and calculated with any ligand excluded.

4. Process according to any one of claims 1 to 3, wherein the electrically conductive support is an electrically conductive carbon material, selected from carbon, graphite, carbon black, or titanium carbide, or titanium nitride.

5. Process according to any one of claims 1 to 4 wherein the ball milling is performed in any ball milling machine among attritor mills, Simoloyer-type ball mills, and planetary ball mills, in a frequency range from 200 to 1400 rpm with balls in a size range from 2 to 20 mm, for a time period from 15 min to 720 min, and the ball mill and the balls are preferably made of steel, carbides, oxides, nitrides, or polymeric materials.

6. Process according to any one of claims 1 to 5 wherein the hydrogenation is carried out under a flow of hydrogen in an inert gas with a hydrogen ratio of 5 to 50 vol-%, preferably 10 to 30 vol-%.

7. Process according to any one of claims 1 to 6 wherein a metal acetylacetonate, selected from Pd or Pt acetylacetonate, is subjected to ball milling with carbon, the obtained product is subjected to hydrogenation and finally to a annealing treatment.

8. A supported metal catalyst obtainable according to the process as claimed in any one of claims 1 to 7.

9. Use of the supported metal catalyst as claimed in claim 8 as a catalyst, preferably as electrocatalyst, and most preferably for cathode side oxygen reduction reaction (ORR) in PEM fuel cells.

## Patentansprüche

1. Verfahren zur Herstellung eines geträgerten Metallkatalysators, bei dem in einem ersten Schritt mindestens eine Metallverbindung einer Kugelmahlung mit einem elektrisch leitfähigen Träger unterzogen wird, der aus elektrisch leitfähigen Kohlenstoffmaterialien wie Kohlenstoff, Graphit, Ruß, Titancarbid oder aus Titannitrid, Bornitrid, Niobnitrid, Indiumzinnoxid und Antimonzinnoxid, vorzugsweise Kohlenstoff, Titannitrid, Bornitrid, noch bevorzugter Kohlenstoff, ausgewählt wird, und in einem zweiten Schritt das Produkt des ersten Schritts unter einem H₂-Druck von 1 bis 10 atm in einem Temperaturbereich von 100 °C bis 500 °C über einen Zeitraum von 1 bis 3 Stunden hydriert und in einem optionalen dritten Schritt das Produkt des zweiten Schritts unter Schutzgasatmosphäre in einem Temperaturbereich von 400 °C bis 1200 °C über einen Zeitraum von 2 bis 12 Stunden geglüht wird,
wobei das Metall der mindestens einen Metallverbindung aus mindestens einem katalytisch aktiven Metall ausgewählt ist, das aus Fe, Co, Ni, Ru, Rh, Ir, Sn und Pt stammt.

2. Verfahren nach Anspruch 1, wobei die mindestens eine Metallverbindung ausgewählt ist aus Metallhalogeniden, Metallnitraten, Metallsulfaten, Metallcarbonaten, Metallcarboxylaten einer Carbonsäure mit 1 bis 12 Kohlenstoffatomen, Metall-β-diketonaten, Metallcarbonyle, Metallocene oder Cyclopentadienyl-Metallkomplexe, vorzugsweise aus Metallcarboxylaten einer Carbonsäure oder Dicarbonsäure mit 1 bis 12 Kohlenstoffatomen, insbesondere 1 bis 6 Kohlenstoffatomen, Metallhalogeniden, Metallnitrate, Metallcarboxylate oder noch bevorzugter aus Metallcarboxylaten einer ein- oder zweibasigen Carbonsäure mit 1 bis 12 Kohlenstoffatomen, insbesondere 1 bis 6 Kohlenstoffatomen, oder Metall-β-diketonaten wie Acetylacetonat.

3. Verfahren nach einem der Ansprüche 1 bis 2, wobei die Beladung des Trägers mit der Metallverbindung im Bereich von 0,5 bis 50 Gew.-%, vorzugsweise 5 bis 40 Gew.-%, noch bevorzugter 5 bis 15 Gew.-%, bezogen auf den Träger und berechnet ohne Berücksichtigung etwaiger Liganden, liegt.

4. Verfahren nach einem der Ansprüche 1 bis 3, wobei der elektrisch leitfähige Träger ein elektrisch leitfähiges Kohlenstoffmaterial ist, ausgewählt aus Kohlenstoff, Graphit, Ruß oder Titancarbid oder Titannitrid.

5. Verfahren nach einem der Ansprüche 1 bis 4, wobei das Kugelmahlen in einer beliebigen Kugelmühle durchgeführt wird, darunter Attritor-Mühlen, Simoloyer-Kugelmühlen und Planetenkugelmühlen in einem Drehzahlbereich von 200 bis 1400 U/min mit Kugeln in einem Größenbereich von 2 bis 20 mm über einen Zeitraum von 15 min bis 720 min durchgeführt wird, und die Kugelmühle und die Kugeln vorzugsweise aus Stahl, Karbiden, Oxiden, Nitriden oder polymeren Materialien bestehen.

6. Verfahren nach einem der Ansprüche 1 bis 5, wobei die Hydrierung unter einem Wasserstoffstrom in einem Inertgas mit einem Wasserstoffanteil von 5 bis 50 Vol.-%, vorzugsweise 10 bis 30 Vol.-%, durchgeführt wird.

7. Verfahren nach einem der Ansprüche 1 bis 6, wobei ein Metallacetylacetonat, ausgewählt aus Pd- oder Pt-Acetylacetonat, einer Kugelmahlung mit Kohlenstoff unterzogen wird, das erhaltene Produkt einer Hydrierung und schließlich einer Glühbehandlung unterzogen wird.

8. Ein auf einem Träger aufgebrachter Metallkatalysator, der nach dem Verfahren gemäß einem der Ansprüche 1 bis 7 erhältlich ist.

9. Verwendung des auf einem Träger aufgebrachten Metallkatalysators gemäß Anspruch 8 als Katalysator, vorzugsweise als Elektrokatalysator, und am bevorzugtesten für die sauerstoffreduzierende Reaktion (ORR) auf der Kathodenseite in PEM-Brennstoffzellen.

## Revendications

1. Procédé de préparation d'un catalyseur métallique sur support, dans lequel, dans une première étape, au moins un composé métallique est soumis à un broyage à billes avec un support électriquement conducteur choisi parmi les matériaux carbonés électriquement conducteurs tels que le carbone, le graphite, le noir de carbone, le carbure de titane, ou parmi le nitrure de titane, le nitrure de bore, le nitrure de niobium, l'oxyde d'indium et d'étain et l'oxyde d'antimoine et d'étain, de préférence le carbone, le nitrure de titane, le nitrure de bore, plus préférablement le carbone, et, dans une deuxième étape, le produit de la première étape est hydrogéné sous une pression de H2 comprise entre 1 et 10 atm, dans une plage de températures comprise entre 100 °C et 500 °C, pendant une durée comprise entre 1 et 3 heures et, dans une troisième étape facultative, le produit de la deuxième étape est recuit sous une atmosphère de gaz protecteur dans une plage de températures comprise entre 400 °C et 1 200 °C pendant une durée compris entre 2 et 12 heures,
dans lequel le métal de l'au moins un composé métallique est choisi parmi au moins un métal catalytiquement actif choisi parmi Fe, Co, Ni, Ru, Rh, Ir, Sn et Pt.

2. Procédé selon la revendication 1, dans lequel l'au moins un composé métallique est choisi parmi les halogénures métalliques, les nitrates métalliques, les sulfates métalliques, les carbonates métalliques, les carboxylates métalliques d'un acide carboxylique ayant de 1 à 12 atomes de carbone, les β-dicétonates métalliques, les carbonyles métalliques, les métallocènes ou les complexes métalliques de cyclopentadiényle, de préférence parmi les carboxylates métalliques d'un monoacide ou diacide carboxylique ayant de 1 à 12 atomes de carbone, en particulier de 1 à 6 atomes de carbone, les halogénures métalliques, les nitrates métalliques, les carboxylates métalliques, ou de préférence encore à partir de carboxylates métalliques d'un acide carboxylique mono- ou di-carboxylique ayant de 1 à 12 atomes de carbone, en particulier de 1 à 6 atomes de carbone, ou les β-dicétones métalliques telles que l'acétylacétonate.

3. Procédé selon l'une quelconque des revendications 1 à 2, dans lequel la charge du composé métallique sur le support est comprise entre 0,5 et 50 % en poids, de préférence comprise entre 5 et 40 % en poids, et de manière plus préférentielle comprise entre 5 et 15 % en poids, par rapport au support et calculée en excluant tout ligand.

4. Procédé selon l'une quelconque des revendications 1 à 3, dans lequel le support électriquement conducteur est un matériau de carbone électriquement conducteur, choisi parmi le carbone, le graphite, le noir de carbone, le carbure de titane ou le nitrure de titane.

5. Procédé selon l'une quelconque des revendications 1 à 4, dans lequel le broyage à billes est effectué dans n'importe quel broyeur à billes parmi les broyeurs à attrition, les broyeurs à billes de type Simoloyer et les broyeurs à billes planétaires, dans une plage de fréquences comprise entre 200 et 1 400 tr/min avec des billes dont la taille est comprise entre 2 et 20 mm, pendant une durée comprise entre 15 min et 720 min, et le broyeur à billes et les billes sont de préférence constitués d'acier, de carbures, d'oxydes, de nitrures ou de matériaux polymères.

6. Procédé selon l'une quelconque des revendications 1 à 5, dans lequel l'hydrogénation est réalisée sous un flux d'hydrogène dans un gaz inerte, avec une teneur en hydrogène comprise entre 5 et 50 % en volume, de préférence comprise entre 10 et 30 % en volume.

7. Procédé selon l'une quelconque des revendications 1 à 6, dans lequel un acétylacétonate métallique, choisi parmi l'acétylacétonate de Pd ou de Pt, est soumis à un broyage à billes avec du carbone, le produit obtenu est soumis à une hydrogénation, puis à un traitement de recuit.

8. Catalyseur métallique supporté pouvant être obtenu selon le procédé décrit dans l'une quelconque des revendications 1 à 7.

9. Utilisation du catalyseur métallique supporté selon la revendication 8 en tant que catalyseur, de préférence en tant qu'électrocatalyseur, et de manière plus préférentielle pour la réaction de réduction de l'oxygène (ORR) du côté cathodique dans des piles à combustible à membrane échangeuse de protons (PEM).
